# EUROPÄISCHE PATENTANMELDUNG

(11) **EP 4 657 743 A1**
(43) Veröffentlichungstag der Anmeldung: **03.12.2025**
(21) Anmeldenummer: 24179315.7
(22) Anmeldetag: 31.05.2024
(51) Int. Cl.: H02M 7/487, H02M 3/156, H02M 1/00, H02M 3/335

(54) **VORRICHTUNG FÜR DIE UMWANDLUNG ZWISCHEN GLEICHSPANNUNG UND WECHSELSPANNUNG UND STEUERUNGSVERFAHREN**

(71) Anmelder: AmbiBox GmbH, 55124 Mainz (DE)
(72) Erfinder: Fuchs, Simon, 55232 Alzey (DE)
(74) Vertreter: Hoffmann Eitle

(57) **Zusammenfassung**

Die Erfindung betrifft eine Vorrichtung (102) für die Umwandlung zwischen Gleichspannung und Wechselspannung umfassend einen Wechselrichter (104), zwei Kondensatoren (106) und zwei Gleichspannungseinheiten (108), wobei jede Gleichspannungseinheit (108) mindestens einen Gleichspannungswandler (110) umfasst, wobei jede der zwei Gleichspannungseinheiten (108) an der Wechselrichterseite jeweils mit einem der zwei Kondensatoren (106) parallel verbunden ist, wobei die Kondensatoren (106) in Serie verbunden sind, wobei der Wechselrichter (104) parallel zu den in Serie verbunden Kondensatoren (106) verbunden ist.

## Beschreibung

### GEBIET DER ERFINDUNG

Die Erfindung betrifft eine Vorrichtung für die Umwandlung zwischen Gleichspannung und Wechselspannung und ein Steuerungsverfahren zur Steuerung eines erfindungsgemäßen Wechselrichters.

### STAND DER TECHNIK

Vorrichtungen für die Umwandlung zwischen Gleichspannung und Wechselspannung werden zur Wandlung von Gleichstrom in Wechselstrom genutzt. Dabei können mittels der Vorrichtung auch mehrphasige Wechselströme erzeugt werden. Ein Beispiel für einen mehrphasigen Wechselstrom ist ein dreiphasiger Wechselstrom.

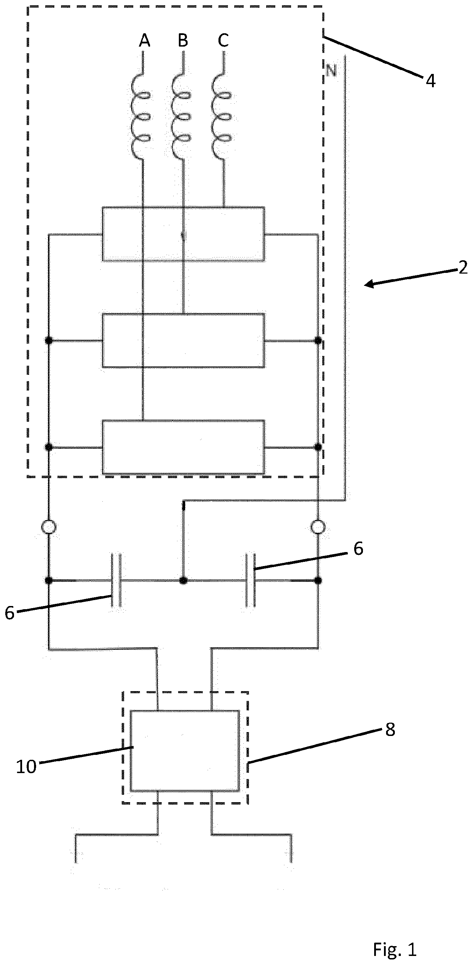

Dabei werden Vorrichtung für die Umwandlung zwischen Gleichspannung und Wechselspannung häufig mit einem Zwischenkreis aus zwei Kondensatoren und einem geerdeten Mittelpunkt ausgeführt wie in Fig. 1 gezeigt. Dies hat Vorteile im Hinblick auf die Reduktion kapazitiver Ableitströme, da das Potential des Zwischenkreises auf diese Weise stabil gehalten werden kann.

Für den Betrieb einer Vorrichtung für die Umwandlung zwischen Gleichspannung und Wechselspannung wie sie beispielsweise in Fig. 1 gezeigt ist, ist lediglich eine Gleichstromleistungsquelle notwendig. Dies kann beispielsweise ein Gleichstromwandler sein, der an eine Batterie oder eine Solaranlage angeschlossen ist.

Soll die Vorrichtung für die Umwandlung zwischen Gleichspannung und Wechselspannung jedoch Inselnetze und damit potenziell unsymmetrische dreiphasige Lasten speisen können, so entsteht durch die nicht mehr konstante abzugebende Wechselstromleistung in Kombination mit dem geerdeten Mittelpunkt eine periodische Spannungsvariation auf den beiden Zwischenkreiskondensatoren. Diese entsteht durch den Unterschied zwischen der instantan abgenommenen Wechselstromleistung und der instantan zugeführten Gleichstromleistung. Bei einphasigen Vorrichtungen ist dies immer der Fall.

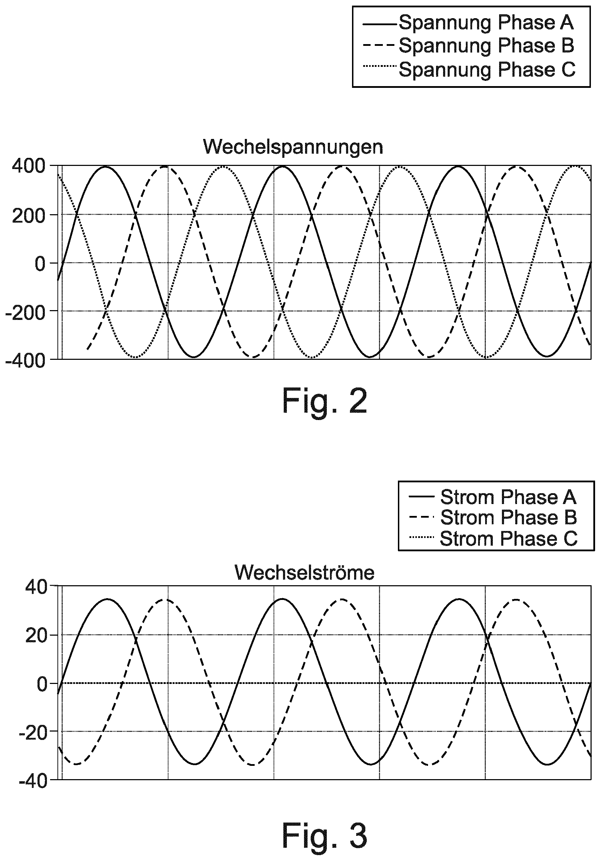

Fig. 2 bis Fig. 5 zeigen beispielhaft den Fall für die in Fig. 1 gezeigten Vorrichtung für die Umwandlung zwischen Gleichspannung und Wechselspannung mit den drei Wechselstromausgänge A, B und C.

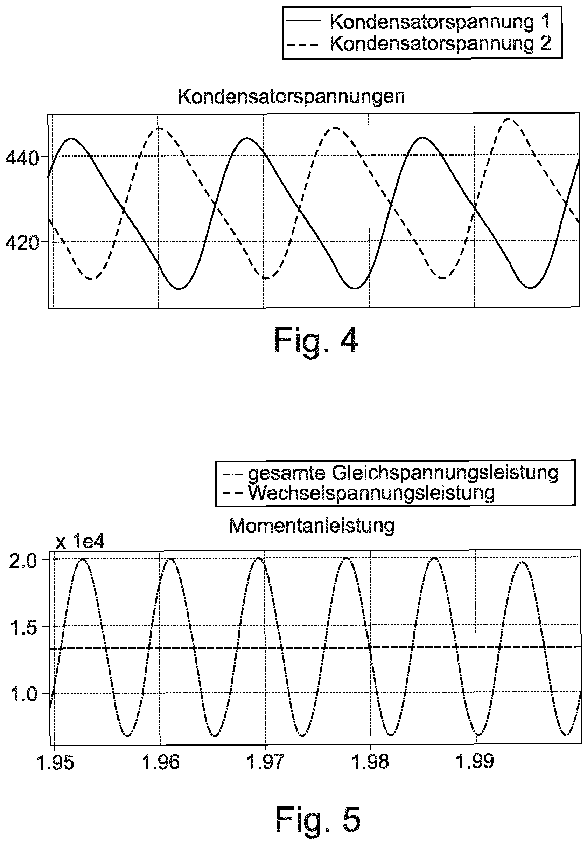

Fig. 2 a zeigt die Spannungen der drei Wechselstromausgänge A, B und C und Fig. 3 zeigt den Strom der Wechselstromausgänge A, B und C. Aufgrund der fehlenden Leistungsabgabe des Wechselstromausgangs C ist in Fig. 5 die variierende Wechselstromleistung und die konstante Gleichstromleistung zu erkennen. Dies führt zu einer großen Spannungsvariation auf den beiden Zwischenkreiskondensatoren wie in Fig. 4 gezeigt.

Die Spannungsvariation muss beschränkt werden. Zum einen muss eine minimale Spannung am Zwischenkreis verfügbar sein, um die Ausgangsspannungen für den Wechselrichter zu stellen. Zum anderen muss die Spannung am Zwischenkreis auf einen maximalen Wert begrenzt sein, um Überspannungen beispielsweise an den Halbleitern zu vermeiden.

Hierzu werden die Zwischenkreiskondensatoren eingesetzt, die die Spannungsvariation limitieren, indem Energie zwischengespeichert wird. Aufgrund der Spannungsvariation müssen die Zwischenkreiskondensatoren deutlich größer gewählt werden als es für den symmetrischen Betrieb der Vorrichtung für die Umwandlung zwischen Gleichspannung und Wechselspannung notwendig wäre. Dies führt zu zusätzlichen Kosten und beansprucht Bauraum in der Vorrichtung, sodass die Effizienz reduziert wird.

Ausgehend von diesem Stand der Technik ist es die Aufgabe der Erfindung eine kostengünstige und kompakte Vorrichtung für die Umwandlung zwischen Gleichspannung und Wechselspannung zur Verfügung zu stellen, die Spannungsvariation ausgleichen kann und einen effizienten Betrieb ermöglicht.

### ZUSAMMENFASSUNG DER ERFINDUNG

Die oben genannte Aufgabe wird gemäß einem ersten Aspekt der Erfindung mit einer Vorrichtung für die Umwandlung zwischen Gleichspannung und Wechselspannung umfassend einen Wechselrichter, zwei Kondensatoren und zwei Gleichspannungseinheiten gelöst, wobei jede Gleichspannungseinheit mindestens einen Gleichspannungswandler umfasst, wobei jede der zwei Gleichspannungseinheiten an der Wechselrichterseite jeweils mit einem der zwei Kondensatoren parallel verbunden ist, wobei die Kondensatoren in Serie verbunden sind, wobei der Wechselrichter parallel zu den in Serie verbunden Kondensatoren verbunden ist.

Die erfindungsgemäße Vorrichtung für die Umwandlung zwischen Gleichspannung und Wechselspannung bietet den Vorteil, dass aufgrund der zwei Gleichspannungseinheiten, die Leistung jeder der zwei Gleichspannungseinheiten frei wählbar sind. Durch die frei wählbare Leistung jeder der zwei Gleichspannungseinheiten wird die Spannungsvariation verringert und damit sind kleinere Zwischenkreiskondensatoren einsetzbar. Dies reduziert Kosten und Bauraum, sodass die erfindungsgemäße Vorrichtung für die Umwandlung zwischen Gleichspannung und Wechselspannung kostengünstig und kompakt ist. Zudem können mit der erfindungsgemäßen Vorrichtung für die Umwandlung zwischen Gleichspannung und Wechselspannung Spannungsvariation zuverlässig ausgeglichen werden. Außerdem ermöglicht die erfindungsgemäße Vorrichtung für die Umwandlung zwischen Gleichspannung und Wechselspannung einen effizienten Betrieb.

Die Umwandlung zwischen Gleichspannung und Wechselspannung kann sowohl die Umwandlung von Gleichspannung zu Wechselspannung als auch die Umwandlung von Wechselspannung zu Gleichspannung umfassen. Die Gleichspannung kann kleiner, gleich oder größer als die Wechselspannung sein.

Der Wechselrichter kann eine Gleichspannung in eine Wechselspannung umwandeln. Hierzu kann der Wechselrichter mindestens eine Halbbrücke aufweisen, deren Ausgang mit einer Spule verbunden sein kann. Bei mehreren Halbbrücken kann der Ausgang jeweils einer Halbbrücke jeweils mit einer Spule verbunden sein. Die Anzahl der Phasen des Wechselrichters sind unbegrenzt, sodass ein, zwei, drei, vier, fünf oder mehr Phasen möglich sind. Somit kann der Wechselrichter ein einphasiger oder mehrphasiger Wechselrichter sein. Ein dreiphasiger Wechselrichter kann eine bevorzugte Ausführungsform sein, da das Stromnetz einen dreiphasigen Wechselstrom bereitstellen kann. Die einzelnen Phasen des mehrphasigen Wechselrichters können zueinander jeweils die gleiche Phasenverschiebung aufweisen. So können die einzelnen Phasen bei einem dreiphasigen Wechselrichter jeweils um 120° zueinander verschoben sein.

Die Kondensatoren können passive elektrische Bauteile sein. Die Kondensatoren können die elektrische Ladung des Gleichstromkreises und die damit zusammenhängende Energie statisch in einem elektrischen Feld speichern.

Die zwei Gleichspannungseinheiten können eine zugeführte Gleichspannung in eine Gleichspannung mit niedrigerer, invertierter oder höherer Spannung umwandeln. Hierzu umfasst jede Gleichspannungseinheit mindestens einen Gleichspannungswandler. Der mindestens eine Gleichspannungswandler kann die zugeführte Gleichspannung in eine Gleichspannung mit niedrigerer, invertierter oder höherer Spannung umwandeln. Die Umwandlung kann mit periodisch arbeitenden elektronischen Schaltern erfolgen. Die Wechselrichterseite kann die Seite der zwei Gleichspannungseinheiten sein, mit der der Wechselrichter verbunden ist. Die Kondensatoren können insbesondere an der Wechselrichterseite der zwei Gleichspannungseinheiten verbunden sein.

Parallel verbunden kann bedeuten, dass bei zweipoligen Bauelementen der Vorrichtung ihre gleichnamigen Pole jeweils gemeinsam verbunden sind. In Serie verbunden kann bedeuten, dass die Bauelemente der Vorrichtung hintereinandergeschaltet sind, sodass sie einen einzigen Strompfad bilden. Zwei Bauelemente können demnach in Serie geschaltet sein, wenn deren Verbindung keine Abzweigung aufweist.

Gemäß einem Ausführungsbeispiel kann die Vorrichtung einen Neutralleiter umfassen, wobei der Neutralleiter mit dem Mittelpunkt zwischen den Kondensatoren verbunden sein kann.

Auf diese Weise können die kapazitiven Ableitströme reduziert werden, da das Potential des Zwischenkreise so stabil gehalten werden kann. Somit kann mit geringen Kosten und auf kleinem Bauraum die Vorrichtung für die Umwandlung zwischen Gleichspannung und Wechselspannung einen effizienten Betrieb gewährleisten.

Der Neutralleiter kann für elektrische Energie ein Leiter sein, der mit dem Neutralpunkt elektrisch verbunden sein kann und in der Lage sein kann, zur Verteilung elektrischer Energie beizutragen. Der Neutralleiter kann geerdet sein.

Der Mittelpunkt kann die elektrische Verbindung zwischen den zwei in Serie verbundenen Kondensatoren sein. Der Neutralleiter kann über den Mittelpunkt mit den beiden Kondensatoren verbunden sein.

Gemäß einem Ausführungsbeispiel kann mindestens eine der Gleichspannungseinheiten galvanisch getrennt ausgeführt sein.

Auf diese Weise kann selbst beim Anschluss der zwei Gelichspannungseinheiten an ein gemeinsames Potential ein Kurschluss des Zwischenkreises am Ausgang der Gleichspannungseinheiten verhindert werden. Dies erhöht die Einsatzmöglichkeit der Vorrichtung, da die zwei Gleichspannungseinheiten an ein gemeinsames Potential angeschlossen werden können. Aufgrund der erhöhten Einsatzmöglichkeiten kann die Vorrichtung für die Umwandlung zwischen Gleichspannung und Wechselspannung für diverse Betriebsmodi eingesetzt werden. Somit kann die Vorrichtung für die Umwandlung zwischen Gleichspannung und Wechselspannung besonders effizient und gleichzeitig kostengünstig sein

Galvanisch getrennt kann bedeuten, dass keine elektrischen Leitung zwischen zwei Stromkreisen bestehen kann, zwischen denen Leistung oder Signale ausgetauscht werden sollen. Hierzu kann die elektrische Leitung durch elektrisch nicht leitfähige Kopplungsglieder aufgetrennt werden. Beispielsweise kann keine elektrische Leitung zwischen den zwei Gleichspannungseinheiten bestehen.

Gemäß einem Ausführungsbeispiel können die zwei Gleichspannungseinheiten dieselbe Anzahl an Gleichspannungswandlern aufweisen.

Auf diese Weise kann die Steuerung und somit der Betrieb des Wechselrichters besonders einfach und effizient sein. Die Anzahl der Gleichspannungswandler kann ein oder mehrere Gleichspannungswandler sein.

Gemäß einem Ausführungsbeispiel können die zwei Gleichspannungseinheiten dieselbe Leistung aufweisen.

Auf diese Weise kann die Steuerung und somit der Betrieb der Vorrichtung für die Umwandlung zwischen Gleichspannung und Wechselspannung besonders einfach und effizient sein. Zudem können die zwei Gleichspannungseinheiten dieselben Gleichspannungswandler umfassen, sodass die Vorrichtung für die Umwandlung zwischen Gleichspannung und Wechselspannung besonders kostengünstig sein kann.

Gemäß einem Ausführungsbeispiel können die zwei Gleichspannungseinheiten an der Eingangsseite an mindestens eine Leistungsquelle und/oder Leistungssenke, insbesondere eine Batterie oder Photovoltaikanlage, angeschlossen sein.

Auf diese Weise kann die Vorrichtung besonders einfach konstruiert sein, da nur eine Leistungsquelle und/oder Leistungssenke angeschlossen sein kann.

Wenn die Vorrichtung an eine Leistungsquelle und/oder Leistungssenke angeschlossen sein kann, können die zwei Gleichspannungseinheiten parallel verbunden sein.

Die Eingangsseite kann die der Wechselrichterseite abgewendete Seite der zwei Gleichspannungseinheiten sein.

Gemäß einem Ausführungsbeispiel können die zwei Gleichspannungseinheiten an der Eingangsseite an mehrere unterschiedliche Leistungsquellen und/oder Leistungssenken angeschlossen sein.

Auf diese Weise kann der Einsatzbereich vergrößert werden, da unterschiedliche Leistungsquellen und/oder Leistungssenken mit der Vorrichtung genutzt werden können. Mithin wird die Vorrichtung vielseitiger und damit effizienter.

Gemäß einem Ausführungsbeispiel können die zwei Gleichspannungseinheiten bidirektional sein.

Auf diese Weise kann Leistung aus der Gleichspannungsquelle sowohl in das Wechselstromnetzwerk übertragen werden, während es auch möglich sein kann Leistung der Gleichspannungsquelle aus dem Wechselstromnetzwerk zur Verfügung zu stellen. Auf diese Weise kann die Nutzung der Vorrichtung für die Umwandlung zwischen Gleichspannung und Wechselspannung besonders vielseitig und effizient sein, während der Bauraum und somit auch die Kosten gering sein können.

Bidirektional kann bedeuten, dass der Strom in beiden Richtungen durch die Vorrichtung fließen kann. Somit kann der Strom von dem Wechselrichter zu den zwei Gleichspannungseinheiten fließen und der Strom kann von den zwei Gleichspannungseinheiten zu dem Wechselrichter fließen.

Gemäß einem Ausführungsbeispiel können die zwei Kondensatoren die gleiche Kapazität und/oder Nennspannung aufweisen.

Auf diese Weise kann die Steuerung somit der Betrieb der Vorrichtung für die Umwandlung zwischen Gleichspannung und Wechselspannung besonders einfach und effizient sein. Zudem kann die Vorrichtung für die Umwandlung zwischen Gleichspannung und Wechselspannung besonders kostengünstig sein, da die Kondensatoren die gleichen sein können.

Die Kapazität kann die gespeicherte Ladung pro Spannung sein. Die Nennspannung kann die maximale Gleichspannung sein, bei der sich der Kondensator im Dauerbetrieb bei Raumtemperatur ohne Schädigung betreiben lässt.

Gemäß einem zweiten Aspekt der Erfindung wird die oben genannte Aufgabe mit einem Steuerungsverfahren zur Steuerung einer erfindungsgemäßen Vorrichtung für die Umwandlung zwischen Gleichspannung und Wechselspannung mit den Schritten gelöst:
- Bestimmen der Spannung an den zwei Kondensatoren,
- Einstellen der Leistung jeder Gleichspannungseinheit zum Ausgleichen der Spannung des jeweils verbundenen Kondensators auf den Arbeitspunkt der Kondensatoren.

Durch das Halten des Arbeitspunktes der Kondensatoren kann die Vorrichtung für die Umwandlung zwischen Gleichspannung und Wechselspannung so gesteuert werden, dass die Wechselstromleistung angepasst werden kann. Ferner werden mit dem erfindungsgemäßen Steuerungsverfahren Spannungsvariation zuverlässig ausgeglichen. Außerdem ermöglicht das erfindungsgemäße Steuerungsverfahren einen effizienten Betrieb der Vorrichtung für die Umwandlung zwischen Gleichspannung und Wechselspannung.

Die Spannung an den zwei Kondensatoren kann, beispielweise mit einem Spannungsmessgerät, gemessen werden. Dies kann den Vorteil einer sehr genauen Bestimmung der Spannung und damit einer sehr effizienten Steuerung haben. Die Spannung an den zwei Kondensatoren kann zusätzlich oder alternativ, insbesondere aus den Betriebsparametern der Vorrichtung, abgeschätzt werden.

Der Arbeitspunkt kann ein Punkt auf der Kennlinie der Kondensatoren sein, der aufgrund des Steuerungsverfahren zur Steuerung einer erfindungsgemäßen Vorrichtung und den auf die Kondensatoren einwirkenden äußeren Einflüsse und Parameter eingenommen werden kann. Der Arbeitspunkt des Kondensators kann derart festgelegt sein, dass er den stabilen Betrieb der Vorrichtung gewährleisten kann. Dies kann bedeuten, dass der Kondensator ausreichend geladen sein kann, um Schwankungen im Gleichstrom zu puffern und eine gleichmäßige Ausgangswechselspannung zu liefern.

Der Arbeitspunkt kann von dem für den Wechselrichter benötigten Spannungsbereich abhängen. Demnach kann der Kondensator an den für den Wechselrichter benötigten Spannungsbereich derart angepasst werden, dass der Arbeitspunkt des Kondensators in der Mitte des für den Wechselrichter benötigten Spannungsbereichs liegt. Es sind jedoch auch andere Arbeitspunkte auswählbar. Insbesondere kann der Arbeitspunkt während der Nutzung angepasst werden.

Gemäß einem Ausführungsbeispiel können die Verluste der Gleichspannungseinheiten beim Einstellen der Leistung jeder Gleichspannungseinheit minimiert werden.

Auf diese Weise kann die Verlustleistung besonders verringert werden, sodass die Vorrichtung für die Umwandlung zwischen Gleichspannung und Wechselspannung besonders effizient mit dem Steuerungsverfahren steuerbar ist.

Die Verluste der zwei Gleichspannungseinheiten sind über deren Arbeitsbereich vorab bekannt. Der Arbeitsbereich entspricht der ausgegebenen oder aufgenommenen Leistung der zwei Gleichspannungseinheiten.

Somit können die Gesamtverluste der zwei Gleichspannungseinheiten für eine beliebige Kombination von Arbeitspunkten bestimmen werden. Anschließend können die Arbeitspunkte der beiden Gleichspannungseinheiten so eingestellt werden, dass die Gesamtleistung beider Gleichspannungseinheiten zusammen der notwendigen zu übertragenden Leistung entspricht, wobei die Gesamtverluste dabei minimiert sein können. In einer bevorzugten Ausführungsform können gleichzeitig die Arbeitspunkte der zwei Gleichspannungseinheiten und die Arbeitspunkte der zwei Kondensatoren derart angepasst werden, dass die Verluste der zwei Gleichspannungseinheiten minimiert werden können und gleichzeitig die Verluste der Kondensatoren minimiert werden können.

Gemäß einem Ausführungsbeispiel kann zur Regelung eine Sigma-Delta-Reglerstruktur verwendet werden.

Mit der Sigma-Delta-Reglerstruktur kann die Effizienz des Steuerungsverfahren erhöht werden.

Bei der Sigma-Delta-Reglerstruktur kann die Summe (Sigma) und die Differenz (Delta) der beiden Kondensatorspannungen getrennt voneinander geregelt werden. Die Sollleistung für die beiden Gleichspannungseinheiten kann sich dann aus der Gesamtbetrachtung der Summe (Sigma) und der Differenz (Delta) der beiden Kondensatorspannungen ergeben. Die Sollspannung für die Differenz kann hierbei Null betragen.

Weitere Aufgaben, Merkmale, Vorteile und Aspekte der vorliegenden Erfindung werden für den Fachmann aus der folgenden Beschreibung und den beigefügten Ansprüchen ersichtlich. Es sollte jedoch verstanden werden, dass die folgende Beschreibung, die beigefügten Ansprüche und die spezifischen Beispiele, die bevorzugte Ausführungsformen der Anwendung zeigen, nur zur Veranschaulichung gegeben werden. Verschiedene Änderungen und Modifikationen im Rahmen des Geistes und des Umfangs der offengelegten Erfindung werden dem Fachmann beim Lesen der folgenden Ausführungen ohne weiteres einleuchten.

### DEFINITIONEN

Die folgenden Ausdrücke haben im Allgemeinen vorzugsweise die nachstehend aufgeführten Bedeutungen, sofern sich aus dem Kontext, in dem sie verwendet werden, nichts anderes ergibt.

Der hier verwendete Ausdruck "umfassen" schließt neben seiner wörtlichen Bedeutung auch die Ausdrücke "im Wesentlichen bestehen aus" und "bestehen aus" ein und bezieht sich speziell auf diese. Somit bezieht sich der Ausdruck "umfassen" sowohl auf Ausführungsformen, bei denen der Gegenstand, der speziell aufgeführte Elemente "umfasst", keine weiteren Elemente umfasst, als auch auf Ausführungsformen, bei denen der Gegenstand, der speziell aufgeführte Elemente "umfasst", weitere Elemente umfassen kann und/oder tatsächlich umfasst. Ebenso ist der Ausdruck "haben" als der Ausdruck "umfassen" zu verstehen, der auch die Ausdrücke "im Wesentlichen bestehen aus" und "bestehen aus" einschließt und sich auf diese bezieht. Der Ausdruck "bestehen im Wesentlichen aus" bezieht sich, soweit möglich, insbesondere auf Ausführungsformen, bei denen der Gegenstand neben den spezifisch aufgeführten Elementen, aus denen der Gegenstand im Wesentlichen besteht, 20 % oder weniger, insbesondere 15 % oder weniger, 10 % oder weniger oder insbesondere 5 % oder weniger weitere Elemente umfasst.

### FIGUREN

- Fig. 1: Vorrichtung für die Umwandlung zwischen Gleichspannung und Wechselspannung nach dem Stand der Technik.
- Fig. 2: Spannungen der Wechselstromausgänge der in Fig. 1 gezeigten Vorrichtung.
- Fig. 3: Strom der Wechselstromausgänge der in Fig. 1 gezeigten Vorrichtung.
- Fig. 4: Spannungsverlauf der zwei Kondensatoren der in Fig. 1 gezeigten Vorrichtung.
- Fig. 5: Wechselstromleistung und konstante Gleichstromleistung der in Fig. 1 gezeigten Vorrichtung.
- Fig. 6: Ausführungsbeispiel einer erfindungsgemäßen Vorrichtung für die Umwandlung zwischen Gleichspannung und Wechselspannung.
- Fig. 7: Spannungen der Wechselstromausgänge der in Fig. 2 gezeigten Vorrichtung.
- Fig. 8: Strom der Wechselstromausgänge der in Fig. 2 gezeigten Vorrichtung.
- Fig. 9: Spannungsverlauf der zwei Kondensatoren der in Fig. 2 gezeigten Vorrichtung.
- Fig. 10: Wechselstromleistung und konstante Gleichstromleistung der in Fig. 2 gezeigten Vorrichtung.

### SPEZIELLE BESCHREIBUNG

Fig. 1 zeigt eine Vorrichtung 2 für die Umwandlung zwischen Gleichspannung und Wechselspannung aus dem Stand der Technik.

Die Vorrichtung 2 für die Umwandlung zwischen Gleichspannung und Wechselspannung umfasst einen mehrphasiger Wechselrichter 4, zwei Kondensatoren 6 und eine Gleichspannungseinheit 8. Die Gleichspannungseinheit 8 umfasst einen Gleichspannungswandler 10. Die Gleichspannungseinheit 8 ist an der Wechselrichterseite mit den zwei Kondensatoren 6 in Serie verbunden. Die Kondensatoren 6 sind in Serie verbunden. Der dreiphasige Wechselrichter 4 ist parallel zu den in Serie verbunden Kondensatoren 6 verbunden.

Fig. 2 bis Fig. 5 zeigen die Spannungsverläufe, die Stromverläufe und Leistungsverläufe für die in Fig. 1 gezeigten Vorrichtung 2 für die Umwandlung zwischen Gleichspannung und Wechselspannung.

Fig. 2 zeigt die Spannungen der drei Wechselstromausgänge A, B und C. Die drei Wechselstromausgänge A, B und C weisen eine Phasenverschiebung von 120° auf.

Dabei zeigt Fig. 3 den Strom der Wechselstromausgänge A, B und C. Aufgrund der fehlenden Leistungsabgabe des Wechselstromausgangs C, weist der Wechselstromausgang C keinen Strom auf. Die Wechselstromausgänge A und B hingegen weisen eine Stromabgabe auf.

Fig. 4 zeigt den Spannungsverlauf der zwei Kondensatoren 6 der in Fig. 1 gezeigten Vorrichtung 2. Die Spannungen der Kondensatoren variiert hierbei zwischen 410V und 450V. Aufgrund der großen Spannungsvariation müssen entsprechend große Kondensatoren gewählt werden bei der Vorrichtung aus Fig. 1.

Fig. 5 zeigt die variierende Wechselstromleistung und die konstante Gleichstromleistung der Vorrichtung 2 in Fig. 1

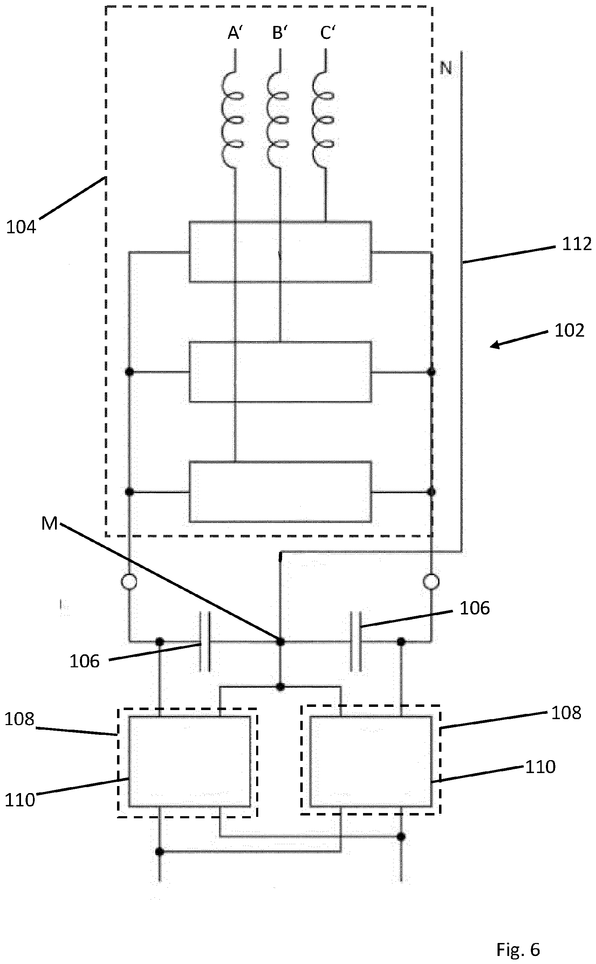

Fig. 6 zeigt ein Ausführungsbeispiel einer erfindungsgemäßen Vorrichtung 2 für die Umwandlung zwischen Gleichspannung und Wechselspannung.

Die Vorrichtung 102 für die Umwandlung zwischen Gleichspannung und Wechselspannung umfasst einen dreiphasigen Wechselrichter 104, zwei Kondensatoren 106 und zwei Gleichspannungseinheiten 108. Jede Gleichspannungseinheit 108 umfasst einen Gleichspannungswandler 110. Jede der zwei Gleichspannungseinheiten 108 ist an der Wechselrichterseite jeweils mit einem der zwei Kondensatoren 106 parallel verbunden. Die Kondensatoren 106 sind in Serie verbunden. Der dreiphasige Wechselrichter 104 ist parallel zu den in Serie verbunden Kondensatoren 106 verbunden.

Die Vorrichtung 102 für die Umwandlung zwischen Gleichspannung und Wechselspannung umfasst einen Neutralleiter 112. Der Neutralleiter 112 ist mit dem Mittelpunkt M zwischen den Kondensatoren 106 verbunden.

Die zwei Gleichspannungseinheiten 108 sind galvanisch getrennt ausgeführt.

Die zwei Gleichspannungseinheiten 108 weisen dieselbe Anzahl an Gleichspannungswandlern 110 auf. Wie in Fig. 6 zu erkennen, weist jede Gleichspannungseinheit 108 einen Gleichspannungswandler 110 auf. Die zwei Gleichspannungseinheiten 108 weisen dieselbe Leistung auf.

Die zwei Gleichspannungseinheiten 108 sind an der Eingangsseite an mindestens eine Leistungsquelle, insbesondere eine Batterie oder Photovoltaikanlage, angeschlossen. Alternativ können die die zwei Gleichspannungseinheiten 108 an der Eingangsseite an mehrere parallel geschaltete Leistungsquelle angeschlossen sein.

Die zwei Gleichspannungseinheiten 108 sind bidirektional. Ferner weisen die zwei Kondensatoren 106 die gleiche Kapazität und Nennspannung auf.

Das erfindungsgemäße Steuerungsverfahren zur Steuerung einer erfindungsgemäßen Vorrichtung 102 für die Umwandlung zwischen Gleichspannung und Wechselspannung kann für die in Fig. 6 gezeigte Vorrichtung verwendet werden.

Das erfindungsgemäße Steuerungsverfahren zur Steuerung einer erfindungsgemäßen Vorrichtung 102 für die Umwandlung zwischen Gleichspannung und Wechselspannung umfasst die Schritte:
- Bestimmen der Spannung an den zwei Kondensatoren 106,
- Einstellen der Leistung jeder Gleichspannungseinheit 108 zum Ausgleichen der Spannung des jeweils verbundenen Kondensators auf den Arbeitspunkt der Kondensatoren 106.

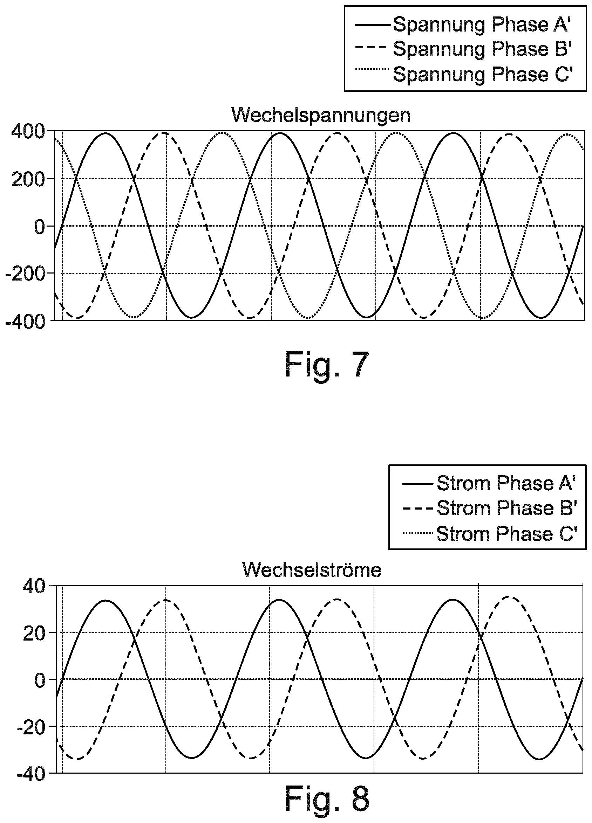

Fig. 7 bis Fig. 9 zeigen die Spannungsverläufe, die Stromverläufe und Leistungsverläufe für die in Fig. 6 gezeigten Vorrichtung für die Umwandlung zwischen Gleichspannung und Wechselspannung.

Fig. 7 zeigt die Spannungen der Wechselstromausgänge A`, B` und C` der in Fig. 2 gezeigten Vorrichtung. Die drei Wechselstromausgänge A`, B` und C` weisen eine Phasenverschiebung von 120° auf.

Fig. 8 zeigt den Strom der Wechselstromausgänge A`, B` und C` der in Fig. 6 gezeigten Vorrichtung 102. Aufgrund der fehlenden Leistungsabgabe des Wechselstromausgangs C`, weist der Wechselstromausgang C` keinen Strom auf. Die Wechselstromausgänge A' und B` hingegen weisen eine Stromabgabe auf.

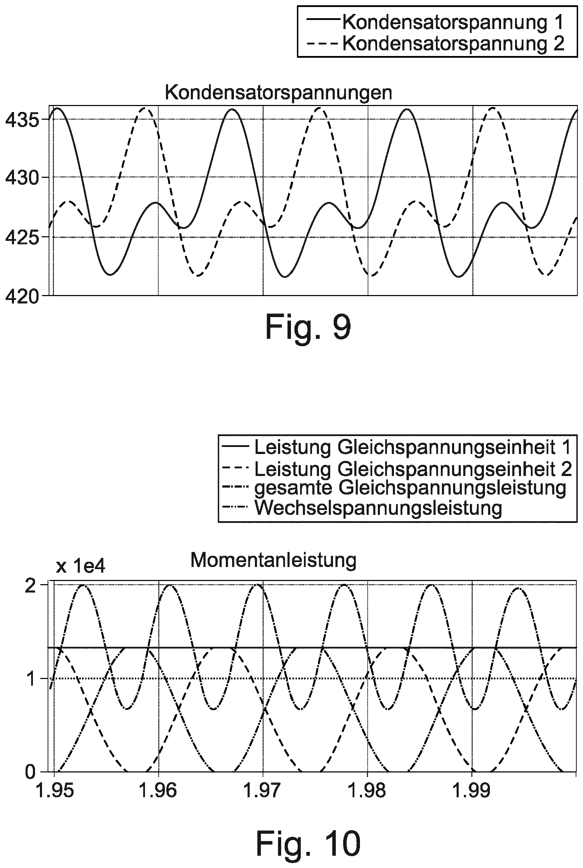

Fig. 9 zeigt den Spannungsverlauf der zwei Kondensatoren 106 der in Fig. 6 gezeigten Vorrichtung. Die Spannungen der Kondensatoren variiert hierbei zwischen 423V und 438V. Aufgrund der geringeren Spannungsvariation können bei der Vorrichtung aus Fig. 6 kleinere Kondensatoren gewählt werden als bei der Vorrichtung aus Fig. 1. Die Spannungsvariation der Kondensatoren 106 der Vorrichtung nach Fig. 6 ist um mehr als 60 % geringer als bei den Kondensatoren 6 bei der Vorrichtung in Fig. 1.

Fig. 10 zeigt die Wechselstromleistung und die konstante Gleichstromleistung der in Fig. 6 gezeigten Vorrichtung. Zudem zeigt Fig. 10 die Leistungen der einzelnen Gleichspannungseinheiten. Dabei sind die Nennleistungen der einzelnen Gleichspannungseinheiten auf das als schwarze Linie eingezeichnete Maximum beschränkt.

## Patentansprüche

1. Vorrichtung (102) für die Umwandlung zwischen Gleichspannung und Wechselspannung umfassend einen Wechselrichter (104), zwei Kondensatoren (106) und zwei Gleichspannungseinheiten (108),
wobei jede Gleichspannungseinheit (108) mindestens einen Gleichspannungswandler (110) umfasst,
wobei jede der zwei Gleichspannungseinheiten (108) an der Wechselrichterseite jeweils mit einem der zwei Kondensatoren (106) parallel verbunden ist,
wobei die Kondensatoren (106) in Serie verbunden sind,
wobei der Wechselrichter (104) parallel zu den in Serie verbunden Kondensatoren (106) verbunden ist.

2. Vorrichtung nach Anspruch 1, **dadurch gekennzeichnet, dass**
die Vorrichtung (102) für die Umwandlung zwischen Gleichspannung und Wechselspannung einen Neutralleiter (112) umfasst,
wobei der Neutralleiter (112) mit dem Mittelpunkt (M) zwischen den Kondensatoren (106) verbunden ist.

3. Vorrichtung nach Anspruch 1 oder 2,
**dadurch gekennzeichnet, dass**
mindestens eine der Gleichspannungseinheiten (108) galvanisch getrennt ausgeführt ist.

4. Vorrichtung nach einem der Ansprüche 1 bis 3,
**dadurch gekennzeichnet, dass**
die zwei Gleichspannungseinheiten (108) dieselbe Anzahl an Gleichspannungswandlern (110) aufweisen.

5. Vorrichtung nach einem der Ansprüche 1 bis 4,
**dadurch gekennzeichnet, dass**
die zwei Gleichspannungseinheiten (108) dieselbe Leistung aufweisen.

6. Vorrichtung nach einem der Ansprüche 1 bis 5,
**dadurch gekennzeichnet, dass**
die zwei Gleichspannungseinheiten (108) an der Eingangsseite an mindestens eine Leistungsquelle und/oder Leistungssenke, insbesondere eine Batterie oder Photovoltaikanlage, angeschlossen sind.

7. Vorrichtung nach Anspruch 6,
**dadurch gekennzeichnet, dass**
die zwei Gleichspannungseinheiten (108) an der Eingangsseite an unterschiedlich geschaltete Leistungsquellen und/oder Leistungssenken angeschlossen sind.

8. Vorrichtung nach einem der Ansprüche 1 bis 7
**dadurch gekennzeichnet, dass**
die zwei Gleichspannungseinheiten (108) bidirektional sind.

9. Vorrichtung nach einem der Ansprüche 1 bis 8,
**dadurch gekennzeichnet, dass**
die zwei Kondensatoren (106) die gleiche Kapazität und/oder Nennspannung aufweisen.

10. Steuerungsverfahren zur Steuerung einer Vorrichtung (102) für die Umwandlung zwischen Gleichspannung und Wechselspannung nach einem der vorherigen Ansprüche mit den Schritten:
- Bestimmen der Spannung an den zwei Kondensatoren (106),
- Einstellen der Leistung jeder Gleichspannungseinheit (108) zum Ausgleichen der Spannung des jeweils verbundenen Kondensators auf den Arbeitspunkt der Kondensatoren (106).

11. Steuerungsverfahren nach Anspruch 10,
**dadurch gekennzeichnet, dass**
die Verluste der Gleichspannungseinheiten (108) beim Einstellen der Leistung jeder Gleichspannungseinheit (108) minimiert werden.

12. Steuerungsverfahren nach Anspruch 11 oder 12,
**dadurch gekennzeichnet, dass**
zur Regelung eine Sigma-Delta-Reglerstruktur verwendet wird.
